# EUROPEAN PATENT APPLICATION

(11) **EP 1 016 364 A2**
(43) Date of publication of application: **05.07.2000**
(21) Application number: 99125235.4
(22) Date of filing: 17.12.1999
(51) Int. Cl.: A47J 31/06

(54) **Device and process for the formation of cream, usable on machines for the preparation of infusions, in particular coffee**

(30) Priority: 18.12.1998 IT MI982740; 17.09.1999 IT TO990799
(71) Applicant: Antica Torref. del Borgo Bardassano snc di Boido Aldo e C., 10060 None (IT)
(72) Inventor: Boido, Valentino, 10099 San Mauro Torninese (IT); Boido, Aldo, 10090 Gassino Torinese (IT); Boido, Davide, 10090 Gassino Torinese (IT)
(74) Representative: Cerbaro, Elena, Dr.

(57) **Abstract**

Device (1) usable in a machine for the preparation of beverages, such as infusions, in particular coffee, obtained by means of a liquid/solid extraction operation, in which a liquid heated and pressurized to a pre-set pressure, passes, by trickling down, through a pre-set amount of solid substance (20) contained in a filter (4, 45). The device (1) includes a back-pressure device (6) set downstream of the filter (4, 45), which is hydraulically connected to the first seat (3, 44). The back-pressure device (6) includes at least one pressure-containing element (12) and one spring (14) which is pre-loaded in compression and is designed to exert a pre-set force on the pressure-containing member (12) and to force it to close a respective second seat (13) having a surface which is substantially shaped like a frustum of a cone and is inclined with respect to the horizontal by an angle (α) of between 40° and 50°.

## Description

The present invention refers to a device usable on machines for the preparation of beverages, such as infusions, in particular machines of the "espresso" type for the preparation of coffee. In particular, the device makes it possible to obtain beverages characterized by a high and thick creaminess. The invention moreover refers to the machine that uses the said device, and finally to the process carried out by the device itself.

It is known that optimal preparation of espresso coffee consists in obtaining an infusion which presents, when it is in the cup, the peculiar characteristic of the presence of cream on the surface. The preparation of espresso coffee, the so-called "espresso bar" coffee, is carried out using special espresso-coffee machines which, basically, pressurize and heat the water up to pre-set values and then cause the heated and pressurized water to pass, by trickling down, through a filter previously filled with ground coffee. While passing, by gravity, through the filter filled with coffee, the hot pressurized water carries out a liquid/solid extraction whereby the aromatic and fatty substances contained in the coffee are transferred in part into the water, thus generating an infusion, which is delivered through a delivery nozzle located downstream of the filter and is collected in a recipient (cup).

The cream that is formed with the method described above generally consists of a thin layer on the surface of the coffee, this representing a limitation of current methods, in that the part that is most appreciated by the consumer from an organoleptic point of view is precisely the cream. A further drawback that is often encountered is the formation of "channels" in the moistened coffee powder. The said "channels" constitute a preferential way for the pressurized hot water, which in this way cannot come into contact with the entire. amount of ground coffee present in the filter in order to carry out the liquid/solid extraction, with the result that the infusion thus obtained is diluted or not very tasty. To overcome this limited exploitation of the coffee content, a very finely ground coffee powder is used in order to have a larger active surface of coffee. However, this entails a number of drawbacks, such as overheating of the coffee with consequent deterioration of the aroma of the infusion (which may take on a burnt taste), and also excessive use of coffee-grinding machines.

An attempt to solve the above problem has been made in EP 0726053 by placing, downstream of the filter, back-pressure means consisting of a very small outlet hole for the infusion, the hole being provided with a needle valve-type cleaner, which is opened by the pressure of the infusion, so as to prevent the infusion from coming out before it reaches a pre-set pressure.

Formation of the cream, which represents the part most appreciated by the consumer from an organoleptic standpoint, should come about following upon the mixing that takes place inside the filter. It has instead been discovered by the present applicant that the said formation of cream mainly takes place during the seepage of the infusion through the back-pressure means.

The constructional characteristics of the device are consequently of essential importance for enabling optimal mixing and thus obtaining a particularly abundant and thick cream, at the same time avoiding overheating of the ground coffee and deterioration of its quality.

The purpose of the present invention is to provide a device to be used on machines for the preparation of infusions, in particular machines for "espresso coffee", in order to obtain infusions presenting a particularly abundant and thick cream, at the same time managing to exploit to the full the entire amount of solid substance present, during the liquid/solid extraction phase.

According to the invention, a device is thus made that may be used in a machine for the preparation of beverages, such as infusions, in particular coffee, obtained by means of a liquid/solid extraction operation, in which a liquid heated and pressurized to a pre-set pressure, passes, by trickling down, through a pre-set amount of solid substance contained in a filter which is basically housed in a fluid-tight way in one first seat; the said device comprising back-pressure means located downstream of the said filter, which are hydraulically connected to the said first seat through an opening, and present a through hole at the said opening; the said back-pressure means comprising valve means set for closure of a second seat and designed for enabling outlet of the infusion only when a pre-set pressure value is exceeded; characterized in that the said second seat has a surface substantially shaped as a frustum of a cone inclined with respect to the horizontal by an angle of between 40° and 50°.

In a preferred embodiment, the seat and the back-pressure means are connected via fast-coupling means, for example respective corresponding threads, to a filter-holder, and the device moreover comprises a compression chamber set between the filter and the back-pressure means. Again according to this preferred embodiment, the back-pressure means comprise valve means that are free to move against contrasting means, designed to allow exit of the infusion from the seat only when a pre-set pressure is reached.

In this way it is possible to obtain an infusion which is provided with abundant and thick cream and has a particularly rich taste deriving from complete exploitation of the amount of solid substance involved in the liquid/solid extraction phase. The above complete exploitation of the solid substance contained in the filter, during the liquid/solid extraction, moreover leads to the advantage that it is not necessary to use a particularly finely ground solid substance, and hence a substance that is subjected to stress that may impair its organoleptic qualities; at the same time, the said substance is prevented, in the case where it is finely ground, from being drawn along by the infusion into the collection recipient, as often occurs, for example, in the production of a coffee infusion. The reduced need for particularly fine grinding of the coffee also means a longer service life for the grinders, in that they are subjected to less stress.

In addition, a self-cleaning effect is obtained owing to the fact that, during preparation of the infusion, only one end part of the mobile valve means is involved. In fact, when the machine is operated empty, i.e., in the absence of the solid substance, the mere passage of steam eliminates any possible residue, and the formation of unhygienic encrustations may thus be prevented without having to dismantle the device.

Further characteristics and advantages of the present invention will emerge clearly from the ensuing description of a non-limiting example of embodiment, with reference to the attached drawings, in which:
- Figure 1 is a schematic longitudinal cross-sectional view of a device according to the present invention;
- Figure 2 is a longitudinal cross-sectional view of an enlarged detail of the device of Figure 1;
- Figure 3 is a longitudinal cross-sectional view of a second embodiment of a device according to the present invention;
- Figures 4 and 5 present tables for one first example of embodiment of the present invention;
- Figures 6 and 7 present graphs for the first embodiment;
- Figures 8 and 9 present tables for a second example of embodiment of the present invention; and
- Figures 10 to 13 present graphs for the second embodiment.

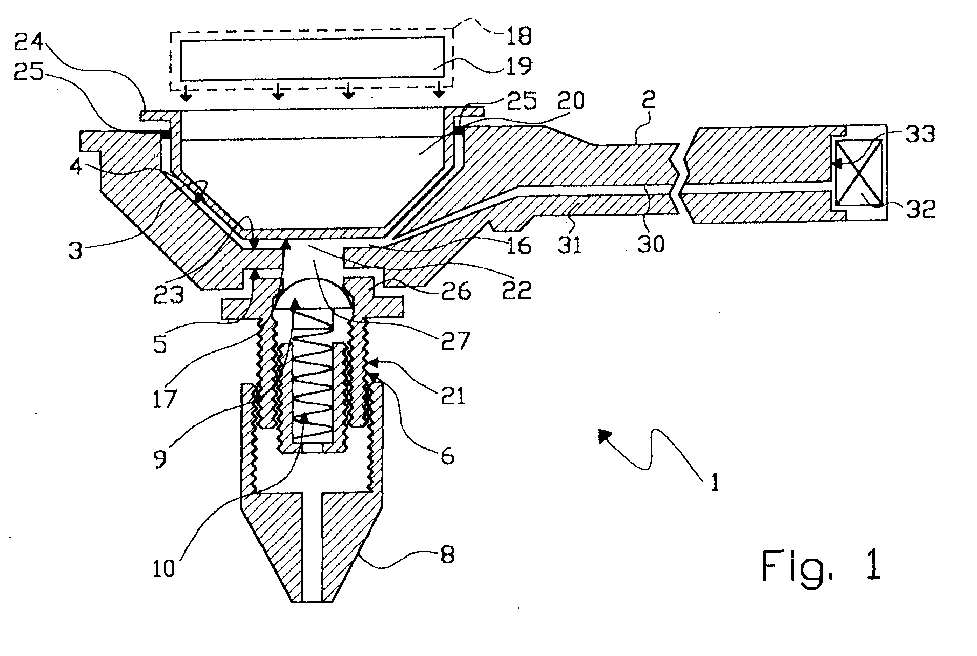

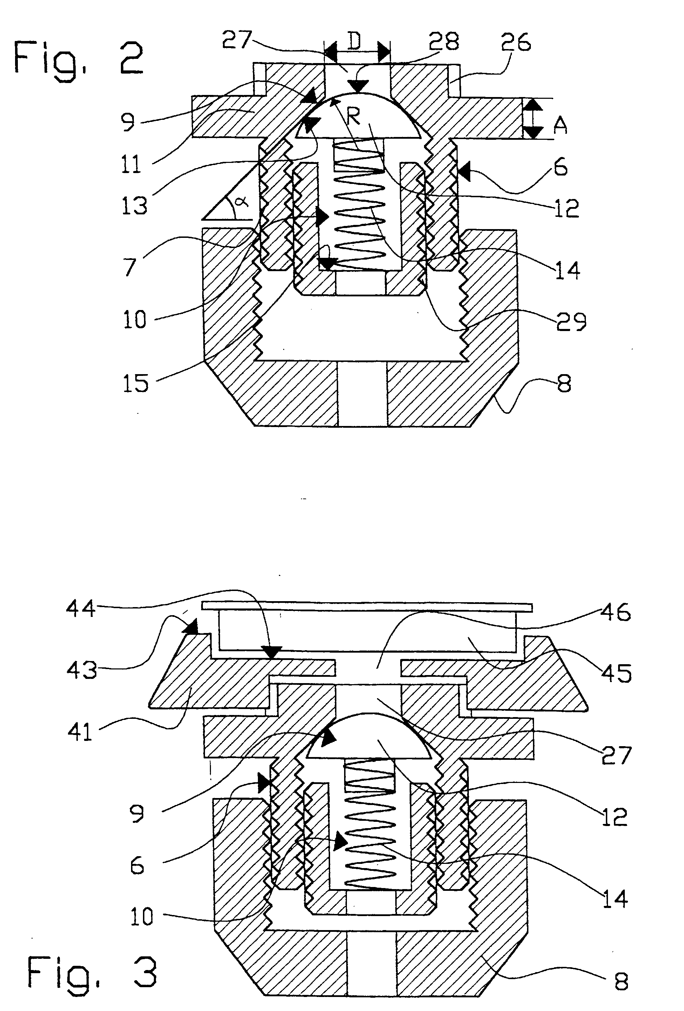

With reference to Figures 1 and 2, number 1 designates a device adaptable on a machine 18, which is known and is illustrated by a block for reasons of simplicity, comprising a hydraulic circuit 19, also known, located upstream of a filter 4. The machine 18 is designed for the production of beverages, such as infusions, obtained by means of liquid/solid extraction, in which a liquid is heated and pressurized to a pre-set pressure and then made to trickle by falling through a pre-set amount of solid substance 20. The device 1 comprises a rigid body 2, defined by a filter-holder device of a type as a whole known, provided internally with one first seat 3 designed for housing the filter 4 for the solid substance with which the infusion is to be prepared, in the case in point the substance being ground coffee. The body or filter-holder 2 moreover comprises known means, which are not illustrated for reasons of simplicity, for assembly, in a fluid-tight manner, on the above-mentioned machine. According to the invention, the filter-holder 2 comprises a second seat 5, located downstream of the first seat 3, designed for housing back-pressure means 6. A bottom end 21 of the back-pressure means 6 is externally provided with coupling means 7, for example a thread, for enabling removable coupling with a supply nozzle 8, for example provided with a corresponding thread.

The filter 4, designed for containing pre-set amounts of solid substance 20, is coupled to the seat 3 substantially in a fluid-tight manner, for example by adhering to the walls of the seat 3, so that the infusion that is being formed in the filter 4 will be prevented from coming out of the seat 3 except through a bottom opening 22 of the seat, downstream of which the seat 5 and the nozzle 8 are located.

Preferably the filter 4, where it comes out of the seat 3, is provided with a rim 24 which rests on the filter-holder 2 and with an O-ring 25 set between the filter 4 and the seat 3 at the rim 24.

The back-pressure means 6 are provided with first coupling means 26, for example a thread, for enabling a removable fluid-tight coupling with the seat 5, for example provided with corresponding thread.

In addition, the back-pressure means 6 comprise, in the case in point, valve means 9 that are free to move against pre-loaded contrasting means 10 designed for allowing the infusion to come out only when a pre-set pressure is exceeded. In particular, the back-pressure means 6 are located inside a cup-like body 11, provided with a through hole 27, located at the opening 22 and having a diameter D equal to or greater than approximately 2-3 mm (conveniently equal to approximately 7 mm).

The valve means 9 comprise at least one pressure-containing element 12 co-operating with a respective seat 13 defined on the inner top surface of the cup-like body 11.

The pressure-containing element 12 has a striking surface 28 basically defined by a spherical cap having a radius R of approximately 5 mm.

In addition, in order to guarantee the best effect, the pressure-containing element 12 is preferably made of an elastomeric material, for example silicone rubber.

Conveniently, the seat 13 has a side surface substantially shaped like a frustum of a cone, inclined with respect to the horizontal by an angle a of between approximately 40° and 50°. In addition, the seat 13 has a height A, measured parallel to the axis of the through hole 27, equal to or greater than 2 mm, and preferably of between approximately 3 mm and approximately 4 mm.

The contrasting means 10 comprise at least one spring 14 pre-loaded in compression, designed to exert a pre-set force on the said pressure-containing element 12 so as to keep it pressed right up against the said seat 13 for closing the latter.

The spring 14 is packed tight between one seat 15 and the pressure-containing element 12.

The seat 15 is provided with a thread 29 for coupling with the bottom end 21, which is internally provided with a corresponding thread. In this way, it is possible to adjust loading of the spring 14 by acting on the seat 15 so as to vary the position of the latter with respect to the cup-like body 11.

Between the filter 4 and the back-pressure means 6, a compression chamber 16 is defined, which, in the case in point, is delimited by the bottom surface 17 of the filter 4 and by at least one portion of the surface 23 of the seat 3.

A duct 30, made inside a handle 31 of the filter-holder 2, connects the compression chamber 16 with a pressure gauge 32 housed in a seat 33 made at one end of the handle 31. In this way, the pressure gauge 32 provides a measurement of the pressure present inside the compression chamber 16.

Operation of the device 1, which is the subject of the invention, is as follows: once the device 1 is mounted on a machine designed for preparing infusions, the machine itself heats and pressurizes a liquid to given values; subsequently, the liquid passes through the substance contained in the filter 4, where liquid/solid extraction takes place, with the consequent formation of the infusion.

Once the infusion has come out of the filter 4, it is blocked by the presence of the pressure-containing element 12, which is forced by the pre-loaded spring 14 to close the seat 13, thus causing the infusion to remain inside and to be continuously stirred, at the same time being continuously produced. The said mixing first takes place in the compression chamber 16 alone and, subsequently, once the latter has filled up, also in the filter 4, this leading to the hot and pressurized liquid being kept for a longer period in contact with the substance contained in the filter, with consequent improvement in the efficiency of the liquid/solid extraction.

The infusion that continues to deposit and mix in the compression chamber 16 and in the filter 4 exerts increasingly higher pressure on the pressure-containing element 12.

Once a given opening pressure P_{A} is reached, the thrust downwards of the infusion overcomes the thrust upwards of the spring 14, and the pressure-containing element 12 comes down, so allowing the infusion to pass inside the cup-like body 11 and then to proceed into the delivery nozzle 8. In particular, the spring 14 is loaded in such a way that the back-pressure means 6 are able to exert a resistance of between a minimum of 0.4 bar and a maximum of 0.8 bar, and preferably, in order to achieve an optimal mixing effect, of between 0.5 and 0.7 bar.

Once the pressure exerted on the pressure-containing element 12 has been relieved, the resistance of the spring 14 re-closes the passage for the infusion, thus bringing the pressure-containing element 12 back to the position where it closes the seat 13. Subsequently the pressure returns to the previous values, so enabling the infusion once more to overcome the thrust of the spring 16 and allowing it to pass again into the cup-like body 11, and then into the delivery nozzle 8. This process, which leads to opening and closing of the pressure-containing element 12, repeats cyclically until the delivery nozzle has delivered the desired amount of infusion.

Mixing of the infusion is particularly important also during seepage of the infusion, which takes place upon opening of the valve means 10, in that it is precisely during this phase that the cream forms. According to the-invention, the inclination a of the side surface having the shape of a frustum of a cone of the seat 13, the height A of the said side surface, the diameter D of the through hole 27 and of the opening 22, the surface having the shape of a spherical cap of the pressure-containing element 12, and the material of which the latter is made, determine favourable parameters for mixing the infusion during seepage.

In addition, according to the invention it is possible to vary loading of the spring by varying the position of the cup-like body 11 inside the seat 5, which necessarily causes a displacement of the pressure-containing element 12 which comes to bear upon the seat 13. This enables the user to vary the "creaminess" and temperature of the coffee, in that a greater resistance of the spring corresponds to a proportionally creamier and hotter coffee.

Furthermore, the pressure gauge 32 makes it possible to check the opening and closing of the valve means 9 and the consequent variations in the pressure inside the compression chamber 16 during the working phase.

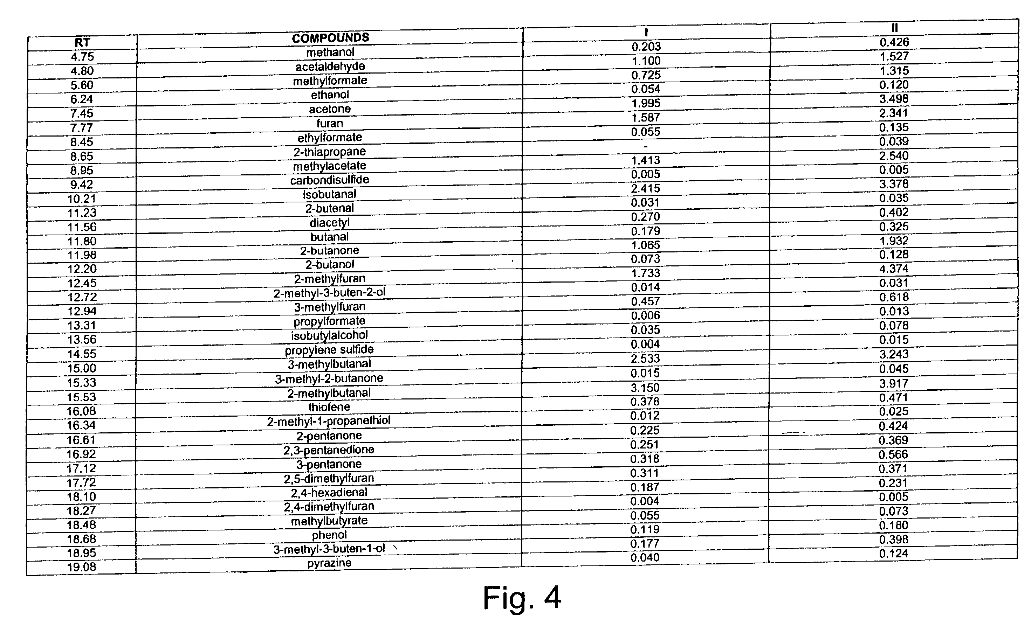

A different embodiment, which can be conveniently used, for example, in automatic vendors for distributing beverages or in coffee machines of the "cartridge" type, is described in what follows with reference to Figure 3, in which parts that are equal to the ones already shown in Figures 1 and 2 are designated by the same reference numbers.

In this case, a filter-holder 40 comprises a plate 41 housed inside the machine for the preparation of infusions, the machine being of a known type and not being illustrated for reasons of convenience.

On a top surface 43 of the plate 41, a seat 44 is made which is designed to receive a filter 45, conveniently consisting of a pre-prepared "cartridge"-type filter containing the solid substance 20.

The plate 41 is connected to back-pressure means 6, of the type described with reference to Figures 1 and 2, set downstream of the seat 44 and communicating with the latter through an opening 46. The back-pressure means 6 are in turn connected to the nozzle 8 to allow passage of the infusion and the subsequent collection thereof in a cup.

With reference to what has been described above, the process for obtaining cream in the production of an infusion according to the invention consequently comprises, in succession, one first phase of preparation of an infusion, during which a hot and pressurized liquid passes through the solid substance present in the filter and then comes out from the bottom of the filter in the form of an infusion; a second, compression, phase, during which the said infusion encounters the resistance of back-pressure means and is thus forced to remain for a period in the back-pressure chamber and in the filter, with consequent mixing of the infusion itself; and a third, decompression, phase during which the infusion that has come out of the filter exerts a thrust such as to overcome the resistance of the back-pressure means, with consequent delivery of the infusion. The phases of compression and decompression repeat cyclically a number of times- during one and the same production of infusion.

According to the process of the invention, the liquid is brought up to a pressure of approximately 9 bar, and the back-pressure means exert a resistance of between 0.4 and 0.8 bar, preferably of between 0.5 and 0.7 bar.

The present invention will now be further described through non-limiting examples of embodiment. In particular, a number of tests were carried out aimed at a comparison between espresso machines equipped with the device according to the present invention and espresso machines of the known type.

The machines were each time used to prepare infusions starting from identical mixtures of ground coffee. The infusions thus obtained then underwent well-known gas-chromatographic and spectroscopic analyses in order to determine the amounts of some of the substances present.

The tests were carried out at the laboratories of the Department of Economics and Commercial-goods Technology of Natural Resources and Production, Commercial-goods Technology Section, of the University of Trieste.

### EXAMPLE 1

Two samples of espresso coffee were analysed that were obtained from the same quantity (6.5 g) of the same mixture of toasted coffee and using different filter-holders: the first sample was extracted with a filter-holder of a known type, whereas the second one was obtained using a filter-holder according to the present invention, in particular of the type described with reference to Figures 1 and 2.

In both cases, the same quantities of toasted coffee were used, i.e., 6.5 g. The samples of espresso coffee thus obtained were put in 50-ml vials for "head-space" analyses and immediately sealed. Then each sample underwent determination of volatile substances (aromagram) by means of the "spurge-and-trap" technique.

For this purpose, a particular apparatus was used consisting of a dynamic head-space directly interfaced with a gas-chromatography - mass-spectrometry system (on-line DSH-GC-MS). After appropriate conditioning and after addition of the internal standard (heptane added using a precision syringe by piercing the self-sealing plug), the samples were "stripped" by means of helium flow for 90 seconds. The volatile substances thus extracted were directly cryofocused in a special trap (cold trap) kept at a temperature of -100°C (by means of liquid nitrogen). At the end of sampling (90 sec.), the trap was brought up rapidly (5 sec.) to 240°C so as to enable thermal desorption of the focused volatile substances and their immission into the gas-chromatography system (the trap is in fact connected directly to the gas-chromatography column): after an appropriate thermal programming, the substances were identified via mass spectrometry operating in electronic impact (EI: 70 eV), after which evaluation of the substances identified was carried out.

The on-line system used enables effective sampling of the volatile substances, without any possibility of loss above all of lighter components. Moreover, it is practically impossible for contamination from external sources to occur, in so far as the system is perfectly gas-tight, and the adsorbent phases which are normally used in "head-spaces" and are often responsible for artefacts are absent.

For each sample of espresso coffee, the gas-chromatographic profile of the aroma (aromagram) was thus obtained. Approximately 70 substances were identified through analysis of the samples.

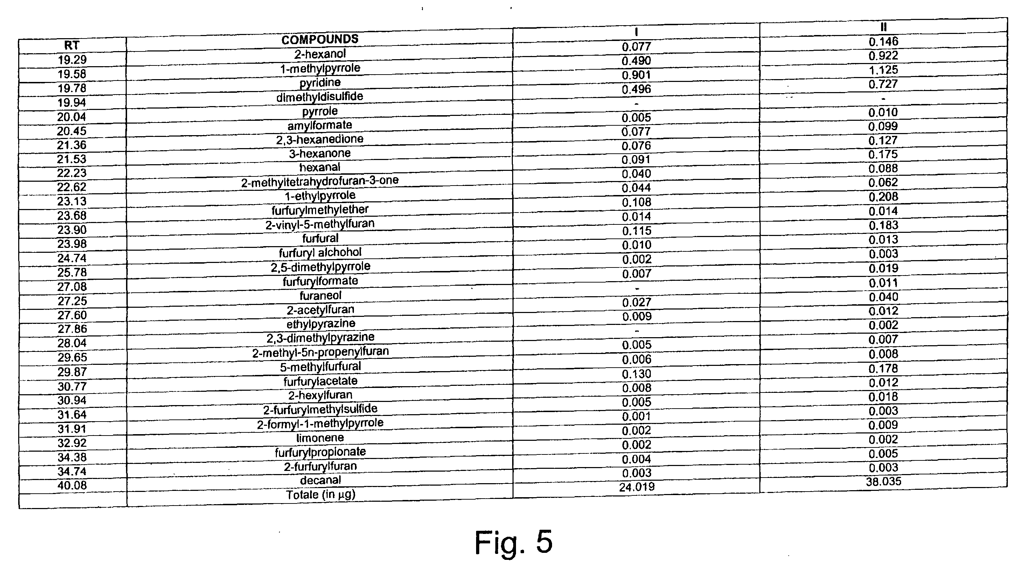

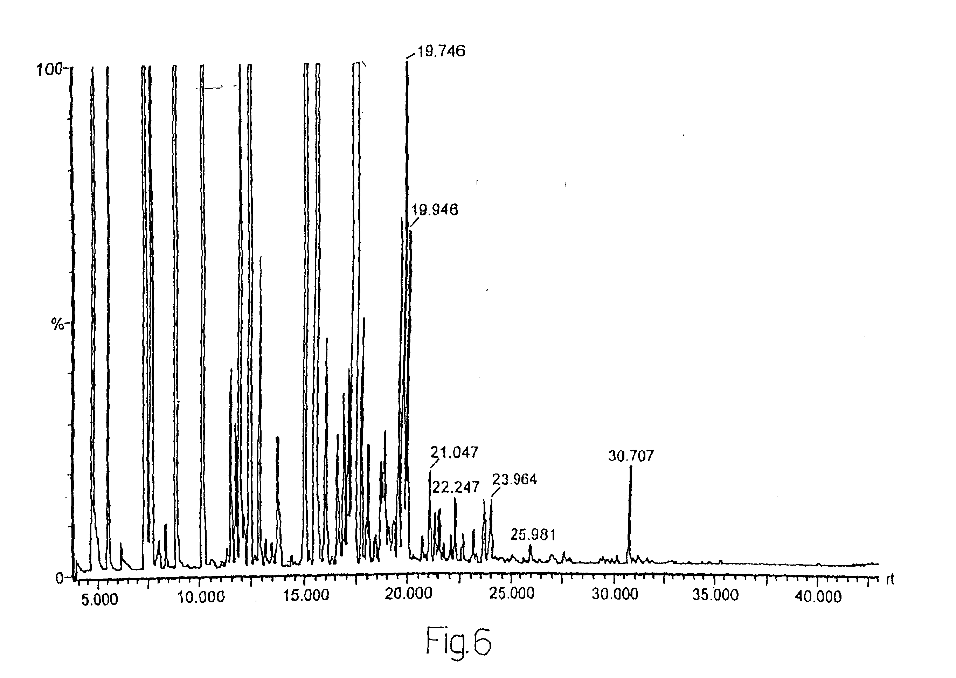

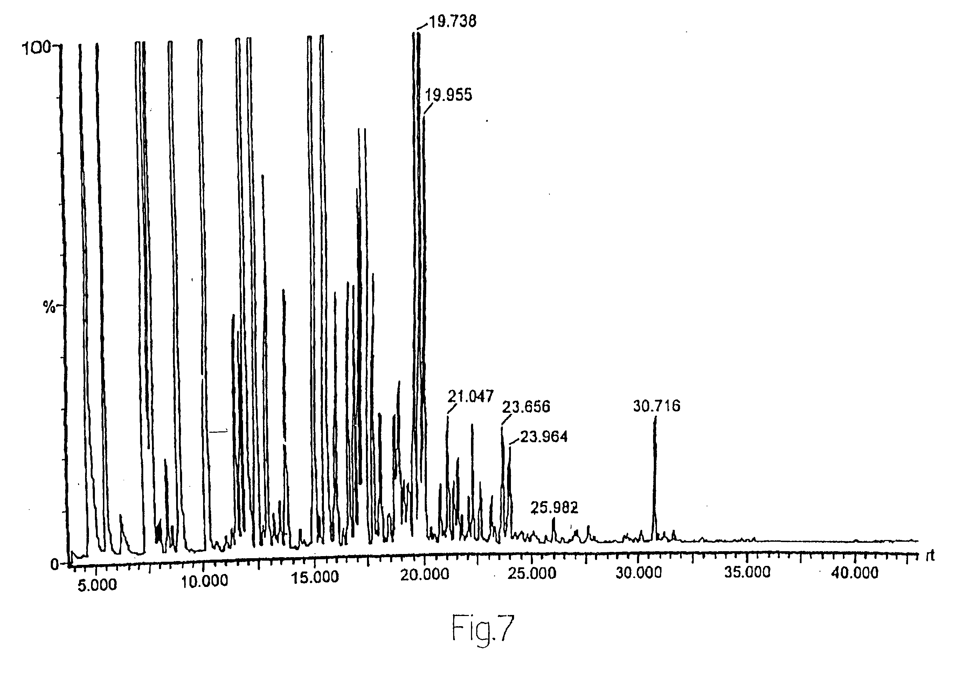

The results of the analyses performed are given in the tables shown in Figures 4 and 5. In detail, the column "COMPOUNDS" contains a list of the substances identified, the column "RT" contains the retention values for each of the above substances, whilst the columns "I" and "II" give the quantities, expressed in micrograms, of the various substances contained in the infusions obtained, respectively, using a filter-holder of a known type and a filter-holder according to the invention. In addition, Figures 6 and 7 present, respectively, the chromatograms obtained starting from the infusions prepared using a traditional filter-holder and using the filter-holder according to the invention.

The analyses carried out on the espresso coffees obtained from one and the same initial coffee mixture, but with the use of two different filter-holders, yielded significantly different results. As may in fact be noted from an analysis of the data given in the tables summarizing the results (Figures 4 and 5), the aroma obtained with the use of the filter-holder according to the invention is considerably more intense than the corresponding aroma obtained using the traditional filter-holder. Practically, all the substances increase from a minimum of 130% for thiophene, pyridine, furfurylmethyl ether, furfuryl alcohol, and 5-methylfurfural, to- over 300%, as, for example, in the case of propylene sulphide, pyrazine, furfurylmethyl sulphide, and limonene.

The increase in the majority of the substances identified in any case settles around 160-170%. At the bottom of the table, the total content of the analytes obtained using the two different filter-holders is given. As may be noted, the increase in aromatic intensity recorded with the use of the filter-holder according to the invention is quite big, since it is around 160%.

From an analysis of what emerged in the course of this investigation, it is reasonable to state that, given the same initial mixture, the intensity of the aroma obtained using the filter-holder according to the invention is considerably higher than that of the corresponding aroma obtained using the traditional filter-holder. It moreover would appear that the increase regards, in quite a balanced way, all the substances making up the aroma, and this should ensure an overall increase in olfactory perception, without any occurrence of undesired imbalance regarding one or more classes of substances.

### EXAMPLE 2

Four samples of espresso coffee were analysed that were obtained from one and the same mixture of toasted coffee using two different extraction techniques: two samples were extracted using a traditional machine, equipped with a filter-holder of a known type, whilst the remaining two samples were obtained using a machine according to the invention, in particular a machine equipped with a filter-holder of the type described with reference to Figure 3. In both cases, two "cartridge"-type filters were used (one for each sample), one containing 5.5 g of coffee and the other containing 6.5 g. With the traditional machine, starting from the 6.5-g "cartridge", 34.6 g of espresso coffee were obtained which were weighed exactly (using a digital weighing machine placed underneath the collector beaker), whilst, from the 5.5-g "cartridge" 35.5 g of espresso coffee were obtained. With the machine according to the invention, starting from the 6.5-g "cartridge", 35.4 g of espresso coffee were obtained, whilst from the 5.5-g "cartridge" 36.0 g of espresso coffee were obtained.

The samples obtained were analysed using the same techniques and methodologies as those described in Example 1.

From an analysis of the samples, approximately 75 substances were identified.

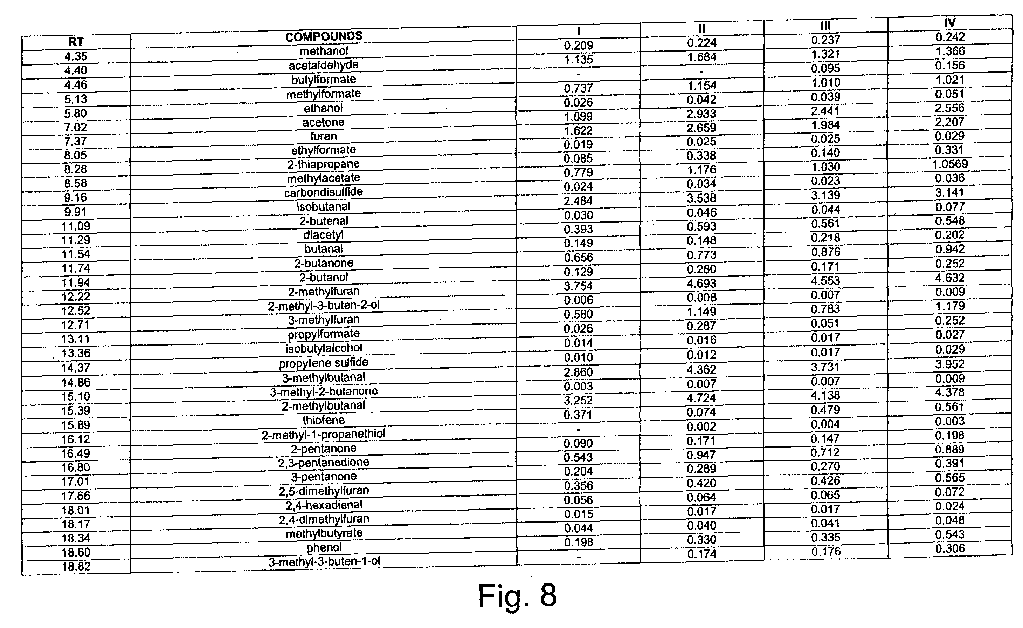

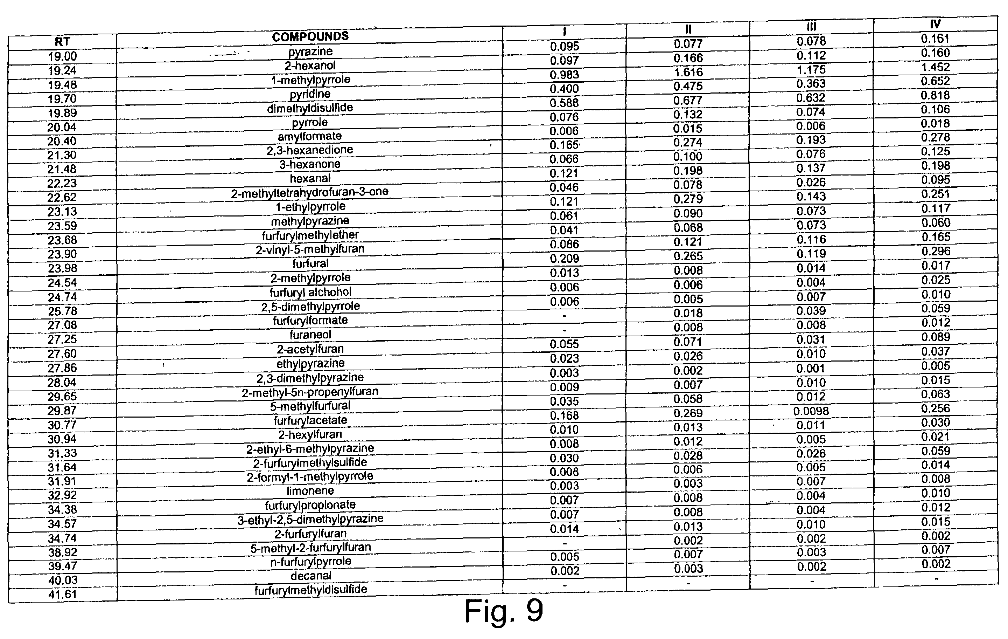

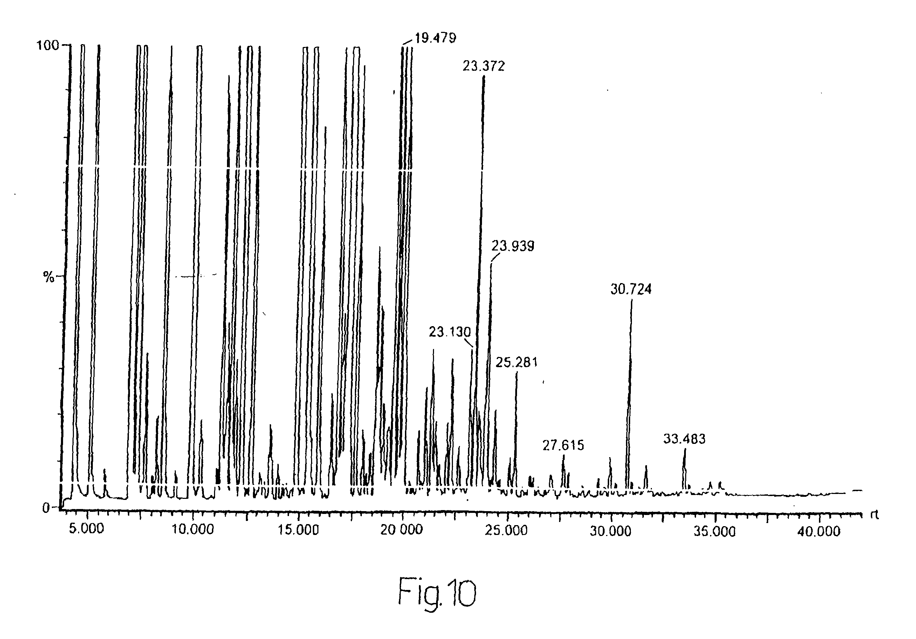

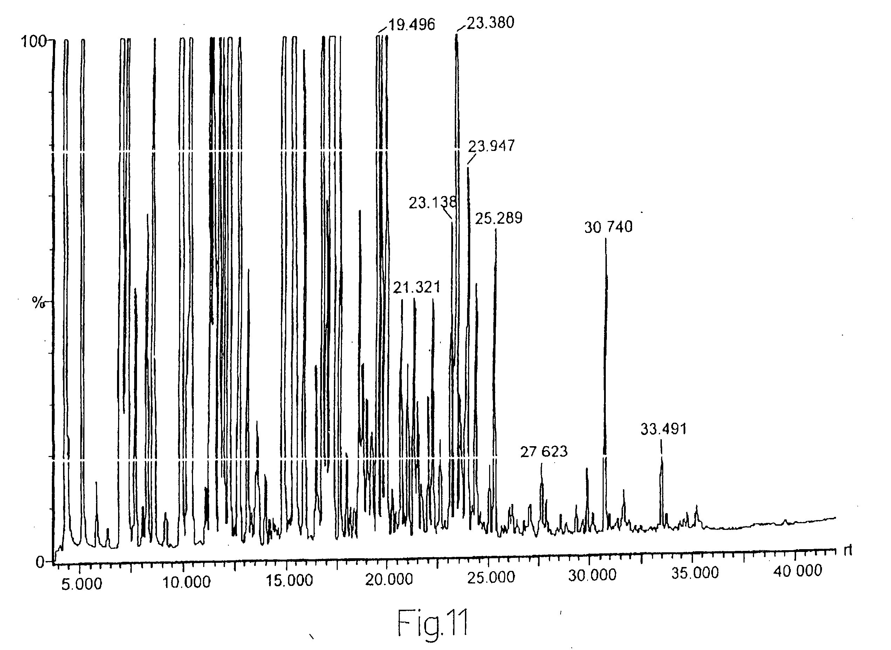

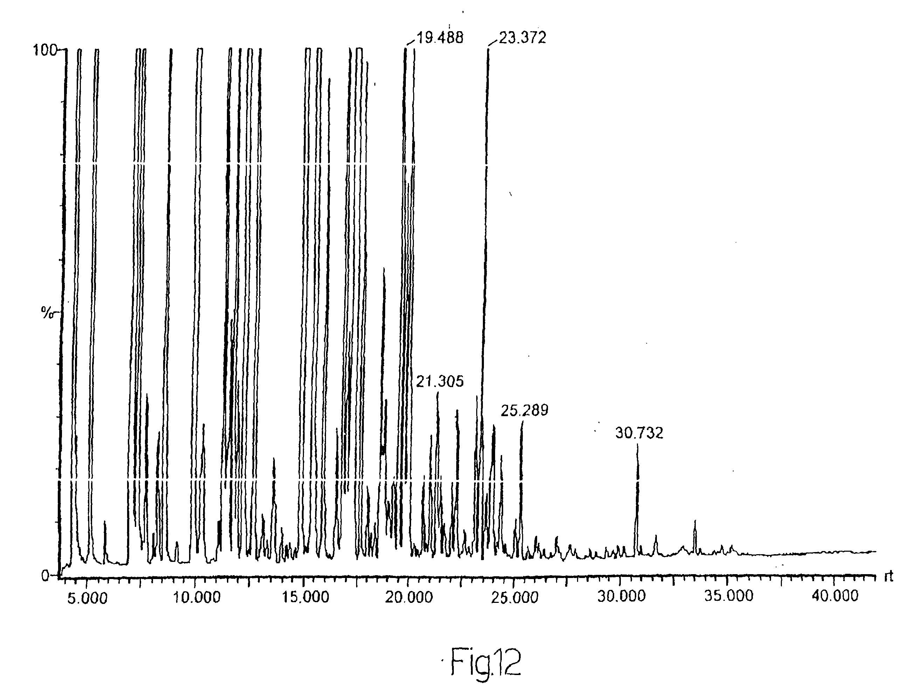

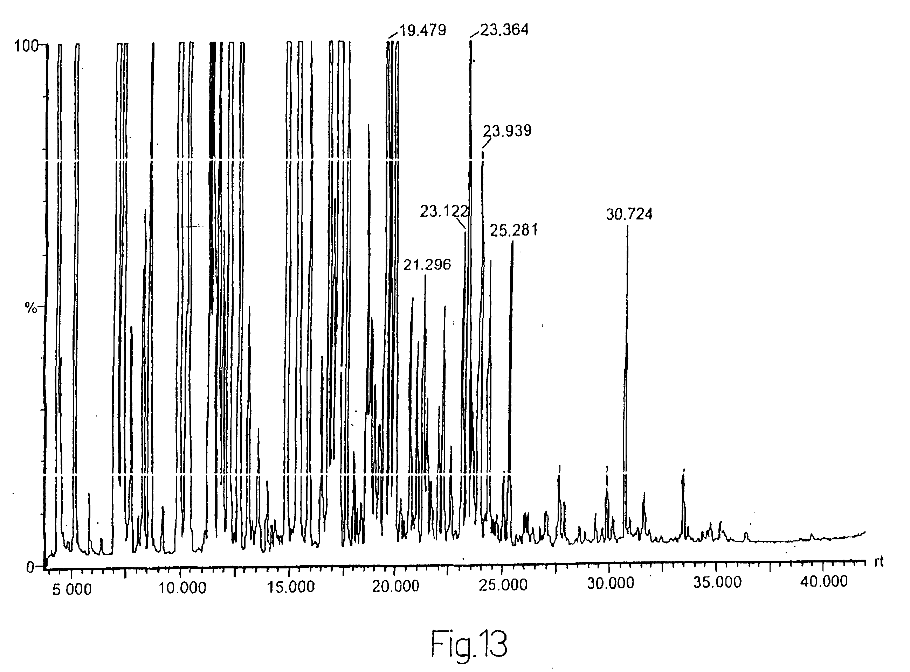

The results of the analyses performed are given in the tables shown in Figures 8 and 9. In detail, the column "COMPOUNDS" contains a list of the substances identified, the column "RT" contains the retention values for each of the above substances, whilst the columns "I" and "II", "III", and "IV" give the quantities, expressed in micrograms, of the various substances contained in the infusions obtained using, respectively: a traditional machine and a "cartridge"-type filter containing an amount of coffee weighing 5.5 g; a traditional machine and a "cartridge"-type filter containing an amount of coffee weighing 6.5 g; a machine according to the invention and a "cartridge"-type filter containing an amount of coffee weighing 5.5 g; and a machine according to the invention and a "cartridge"-type filter containing an amount of coffee weighing 6.5 g. In addition, Figures 10, 11, 12, and 13 show the gas-chromatograms obtained in the four cases and corresponding to the data given, respectively, in columns I, II, III and IV.

From a comparison of the data for the two espresso coffees obtained with the traditional machine and with the machine according to the invention starting from 6.5-g "cartridges" of the same coffee mixture, it is noted that, in general, there is a greater content of volatile substances in the espresso coffee obtained with the machine according to the invention. In particular, there emerge results, for the two espresso coffees, that may be considered interesting. In fact, even though in general the aroma obtained with the machine according to the invention is more intense (quantitatively), certain substances, such as butanal derivatives (isobutanal, 3-methyl butanal, and 2-methyl butanal) and acetates (acetaldehyde, acetone, methyl acetate, diacetyl acetate, and furfuryl acetate) are present in higher amounts in the espresso coffee obtained using the traditional machine. This may lead to a more pungent aromatic tonality in the espresso coffee obtained using the traditional machine as compared to the espresso coffee obtained using the machine according to the invention, which, on the other hand, should ensure an olfactory sensation of aroma that is more intense and has more body, but is also more velvety.

From the comparison between the espresso coffee obtained from the machine according to the invention from 5.5 g of coffee and the espresso coffee obtained with the traditional machine from 6.5 g of coffee, for the first part of the chromatograms a similar content of analytes may be noted (with the exception of certain ketones, such as 2-pentanone and 2,3-pentanedione), whilst in the second part of the chromatograms (after approximately 20 minutes) a lower content is noted of certain compounds in the espresso coffee obtained using the machine according to the invention, such as methylpyrrole, pyridine, pyrrole, hexanal, methyltetrahydro-furanone, ethylpyrrole, furfural, and methylfurfural. The other components detected are present in practically comparable amounts.

In view of the results obtained, it may be reasonably assumed that the espresso coffee obtained using the machine according to the invention from 5.5 g of coffee preserves the same characteristics of velvetiness as those present in the aroma of the espresso coffee obtained using the same machine, but starting from 6.5 g of product. Also in this case, in fact, the acetates are present in lower amounts than in the espresso coffee obtained using the traditional machine.

From the data obtained it may be stated that the aromatic intensity of the espresso coffee obtained using the machine according to the invention with 5.5-g "cartridges" of coffee, as compared to the espresso coffee obtained using a traditional machine with 6.5-g "cartridges" of coffee, could prove similar or slightly less evident to the smell. It would therefore be possible to hypothesize an aromatic intensity altogether comparable between the two espresso coffees if the amount of coffee to be extracted were slightly increased (for example, using "cartridges" weighing 5.75-6.0 g) in the machine according to the invention.

Finally, it is clear that modifications and variations may be made to the device described herein without departing from the scope of the invention. For example, it is possible to envisage an embodiment of the invention that uses a sintered porous capsule or a capsule made of wire-meshed Teflon as back-pressure means to be inserted in the seat 5.

## Claims

1. Device (1) usable in a machine for the preparation of beverages, such as infusions, in particular coffee, obtained by means of a liquid/solid extraction operation, in which a liquid heated and pressurized to a pre-set pressure, passes, by trickling down, through a pre-set amount of solid substance (20) contained in a filter (4, 45) which is basically housed in a fluid-tight way in one first seat (3, 44); the said device comprising back-pressure means (6) located downstream of the said filter (4, 45), which are hydraulically connected to the said first seat (3, 44) through an opening (22, 46), and present a through hole (27) at the said opening (22, 46); the said back-pressure means (6) comprising valve means (9) set for closure of a second seat (13) and designed for enabling outlet of the infusion only when a pre-set pressure value (P_{A}) is exceeded; characterized in that the said second seat (13) has a surface substantially shaped as a frustum of a cone inclined with respect to the horizontal by an angle (α) of between 40° and 50°.

2. Device according to Claim 1, characterized in that the said second seat (13) has a height (A), measured parallel to the axis of the said through hole (27), equal to or greater than 2 mm.

3. Device according to either of the foregoing claims, characterized in that the said through hole (27) has a diameter (D) greater than 2 mm.

4. Device according to Claim 3, characterized in that the said through hole (27) has a diameter (D) of approximately 7 mm.

5. Device according to any one of the foregoing claims, characterized in that the said valve means (9) comprise a pressure-containing element (12) that is free to move against contrasting means (14) designed for keeping the pressure-containing element (12) in a position so that it closes the said second seat (13); and in that the said pressure-containing element (12) is made of an elastomeric material.

6. Device according to Claim 5, characterized in that the said elastomeric material is silicone rubber.

7. Device according to any one of the foregoing claims, characterized in that a striking surface (28) of the said pressure-containing element (12) is defined by a spherical cap.

8. Device according to any one of the foregoing claims, characterized in that the said pre-set pressure value (P_{A}) is between 0.4 and 0.8 bar.

9. Device according to Claim 8, characterized in that the said pre-set pressure value (P_{A}) is between 0.5 and 0.7 bar.

10. Device according to any one of the foregoing claims, characterized in that it comprises a compression chamber (16) set between the said filter (4) and the said back-pressure means (6).

11. Device according to Claim 10, characterized in that it comprises pressure-measuring means (32) connected to the said compression chamber (16) to furnish a measurement of the pressure present inside the said compression chamber (16).

12. Machine for obtaining beverages consisting of infusions, in particular machines of the "espresso" type, comprising at least one hydraulic circuit, set upstream of a filter, designed for supplying the said filter with pressurized hot liquid, the machine being characterized in that it moreover comprises a device (1) according to any one of Claims from 1 to 11.

13. Process that can be carried out in machines for obtaining beverages, such as infusions, in particular machines of the "espresso" type, the process comprising a phase of preparation of the said infusion, in which a hot and pressurized liquid trickles down through a pre-set amount of solid substance contained in a filter, and then comes out by gravity from the bottom of the said filter in the form of the said infusion, which is delivered into a special recipient through a delivery nozzle, and being characterized in that it comprises a compression phase during which the said infusion, before it is delivered through the said nozzle, encounters the resistance of back-pressure means designed to force the said infusion to remain for a period between the said back-pressure means and a bottom surface of the said filter, consequently causing mixing of the infusion; and in that it comprises a decompression stage, in which the said infusion that has come out of the filter exerts a thrust such as to overcome the resistance of the said back-pressure means, with consequent delivery of the said infusion through the said nozzle.

14. Process according to Claim 13, characterized in that the-said phases of compression and decompression repeat cyclically a number of times during one and the same production of infusion.

15. Process according to Claim 14, characterized in that the said liquid is brought up to a pressure of approximately 9 bar, and in that, during the compression stage, the said back-pressure means exert a resistance of between 0.4 and 0.8 bar, preferably of between 0.5 and 0.7 bar.
